# EUROPÄISCHE PATENTSCHRIFT

(11) **EP 3 015 282 B1**
(45) Veröffentlichungstag und Bekanntmachung des Hinweises auf die Patenterteilung: **30.11.2016**
(21) Anmeldenummer: 14191077.8
(22) Anmeldetag: 30.10.2014
(51) Int. Cl.: B44C 5/04, B32B 21/06

(54) **Verfahren zur Herstellung eines Holzwerkstofflaminats**
Method for producing a wood laminate
Procédé de fabrication d'un laminé en bois

(43) Veröffentlichungstag der Anmeldung: 04.05.2016
(73) Patentinhaber: Flooring Technologies Ltd., Pieta PTA 9044 (MT)
(72) Erfinder: Hasch, Joachim, 10317 Berlin (DE); Kabza, Pawel, 66008 Wilkanovo (PL)
(74) Vertreter: Maikowski & Ninnemann Patentanwälte Partnerschaft mbB

(56) Entgegenhaltungen:
- WO-A2-2013/102804
- GB-A- 1 036 008
- US-A1- 2013 065 072

## Beschreibung

Die vorliegende Erfindung betrifft ein Verfahren zur Herstellung eines Holzwerkstofflaminats gemäß Anspruch 1.

### Beschreibung

Als Laminate werden Werkstoffe oder Produkte bezeichnet, die aus zwei oder mehreren flächig miteinander verklebten und/oder verpressten Materialschichten bestehen. Diese Materialschichten können dabei aus dem gleichen oder unterschiedlichen Materialien bestehen.

So werden z.B. Laminate auf Basis von Holzwerkstoffen hergestellt, die vielfache Anwendung finden wie z.B. in der Möbelindustrie in Form von dekorierten Möbeloberflächen auf einer Spanplatte oder als Wand- oder Deckenverkleidung auf Basis einer mitteldichten Faserplatte. Weit verbreitet ist zudem die Verwendung von Holzwerkstofflaminaten als Fußbodenbelag, der das Aussehen von hochwertigen Bodenbelägen (meist Parkett) imitiert, dabei allerdings aus einer preiswerten Trägerplatte (wie einer mitteldichten oder einer hochdichten Faserplatte) mit einer geeigneten Dekorschicht besteht. Derartige Fußbodenlaminate sind sehr preiswert und zudem leicht verlegbar; Fußbodenlaminate in Form so genannter Klickpaneele lassen sich einfach und sicher schwimmend verlegen.

Laminatfußböden sind in verschiedenen Nutzungsklassen erhältlich, wobei in erster Linie zwischen hochwertigen Fußbodenlaminaten für den gewerblichen Bereich mit hohen Nutzungsanforderungen und preiswerteren Fußbodenlaminaten für den privaten Bereich mit geringeren Nutzungsanforderungen unterschieden wird.

Hochwertige Fußbodenlaminate für den gewerblichen Bereich müssen den Anforderungen der Klasse 34 (AC6 nach prEN 13329:2013) an Laminatfußböden entsprechen. So muss die Abriebbeständigkeit, Stoßbeanspruchung (bestimmbar mit einer kleinen und großen Kugel) und die Dickenquellung bestimmte Parameter erreichen, die typischerweise über den Werten von preiswerter hergestellten Laminaten liegt.

Um die erforderlichen Anforderungen zu erreichen, werden die Fußbodenlaminate der Klasse 34 in einem zumindest zweistufigen Verfahren hergestellt. Dazu werden zunächst mehrere harzgetränkte Papiere oder Papierlagen mit einer Dekorschicht (oder Dekorpapierlage) und einem Overlaypapier oder Overlaypapierlage unter Ausbildung eines "High pressure Laminates (HPL)" miteinander untrennbar verpresst. Diese separate hergestellte Einheit wird dann auf die Oberseite einer besonders hochwertig vergüteten Holzwerkstoffträgerplatte aufkaschiert. Bei Anwendung dieses Verfahrens in der Herstellung des Gegenzuges wird typischerweise auf die Dekorschicht verzichtet.

HPL besteht aus mehreren Lagen von mit Harz, z.B. mit Phenolharz imprägnierten Zelluloselagen, die in langen Presszyklen und unter sehr hohem Druck und Temperatur dauerhaft und widerstandsfähig miteinander verbunden werden. Neben ansprechenden Dekoren werden zunehmend auch Strukturen in der Oberfläche eines HPL abgebildet, indem beispielsweise Strukturgeber in den zu verpressenden Verbund eingebracht werden. Wie oben erwähnt, sind solche Laminatfußböden für gewerbliche Anwendungen vorgesehen und müssen dabei dauernden hohen Beanspruchungen und häufigem maschinellem Reinigen Stand halten.

Der Nachteil des bisher zum Einsatz kommenden Verfahrens zur Herstellung von Fußbodenlaminaten der Klasse 34 besteht allerdings, dass die Herstellung von HPL und Fußbodenlaminat in separaten Arbeitsgängen erfolgt und dadurch ein höherer logistischer Aufwand und die damit verbundenen höheren Kosten erforderlich sind. Auch sind derzeit für die Herstellung der HPL-Einheit besondere Maschinen mit Pressdrücken von größer gleich 50 kg/cm² bei einer Temperatur ≥120 °C nach DIN- EN 438 T1-9 erforderlich und die lange Taktzeit von bis 20-60 min ermöglicht keine sinnvolle Verknüpfung der Arbeitsgänge. Auch wenn die Ausgangsstoffe für HPL für sich gesehen günstig sind, besteht ein HPL jedoch üblicherweise aus mindestens vier Lagen, so dass sich der Einsatz von HPL kostenintensiv gestaltet. Entsprechend wirken sich Verschnitte an dem Laminat oder fehlerhafte Chargen besonders nachteilig aus. Zudem ist die Verarbeitung von HPL auf Grund der großen Härte der Oberfläche nur mit Spezialwerkzeugen möglich.

Wie oben angemerkt, müssen Laminatfußböden für den privaten Bereich (eingeordnet in der Klasse 33 der Laminate) lediglich geringeren Anforderungen an Abriebbständigkeit und Stoßbeanspruchung genügen. Laminatfußböden der Klasse 33 bestehen typischerweise aus einer Trägerplatte aus Holzwerkstoff, insbesondere einer mittel- oder hochdichten Holzfaserplatte (MDF/HDF) mit oberseitig angeordnetem Dekor und Overlay und mit unterseitig angeordnetem Gegenzug. Trägerplatte, Dekorschicht, Overlay und Gegenzug werden in einem Arbeitsgang unter Wirkung von Druck und Wärme verpresst werden; das so hergestellte Laminat wird daher als DPL (direct pressure laminate) bezeichnet. Häufig werden strukturierte Pressbleche verwendet, so dass oberseitig zu der Dekorierung passende Strukturen entstehen. Besonders hochwertig ist dabei eine Ausrichtung von Dekor und Pressblech zueinander zur Erzeugung einer so genannten Synchronporenstruktur oder embossed-in register-Struktur. Solche Fußbodenbeläge sind für private Anwendungen vorgesehen und müssen dabei leichten Beanspruchungen und Reinigen von Hand und/oder mit einfachen Hilfsmitteln Stand halten. Zwar bestehen erhöhte Erwartungen an die Qualität solcher Produkte, jedoch werden gleichzeitig sinkende Endverbraucherpreise erwartet, so dass ein Sprung von Klasse 33 auf Klasse 34 nicht sinnvoll machbar scheint.

Trotzdem gibt es nach wie vor Bestrebungen und einen großen Bedarf zur Übertragung der DPL Technologie auf die Herstellung von höherwertigen Laminatprodukten der Klasse 34.

Der Erfindung liegt daher die technische Aufgabe zu Grunde, ein Verfahren anzubieten, mit dem Laminatprodukte der Klasse 34 sicher in einem Arbeitsgang herstellbar sind.

Diese Aufgabe wird erfindungsgemäß durch ein Verfahren mit den Merkmalen des Anspruchs 1 gelöst.

Demnach wird ein Verfahren zur Herstellung eines Holzwerkstofflaminats bereitgestellt, welches die folgenden Schritte umfasst:
- Bereitstellen von mindestens einer Holzwerkstoffplatte als Trägerplatte;
- Bereitstellen von mindestens einer, bevorzugt mindestens zwei mit einem Harz imprägnierten Papierlagen (auch Kernpapier genannt) mit einem Gewicht von 40 bis 250 g/m² und einem Beharzungsgrad von 40 bis 180%, mindestens einer mit einem Harz imprägnierten Dekorpapierlage mit einem Gewicht von 35 bis 180g/m² und einem Beharzungsgrad von 80 bis 180% und mindestens einer mit einem Harz imprägnierten abriebfesten Papierlage (auch Overlay genannt) mit einem Gewicht von 10 bis 80 g/m² und einem Beharzungsgrad von 200 bis 900% zur Ausbildung von mindestens einem oberseitigen Schichtaufbau auf der mindestens einen Trägerplatte;
- Bereitstellen von mindestens einer, bevorzugt mindestens zwei mit einem Harz imprägnierten Papierlagen (auch Kernpapier genannt) mit einem Gewicht von 40 bis 250 g/m² und einem Beharzungsgrad von 40 bis 180, zur Ausbildung von mindestens einem unterseitigen Schichtaufbau auf der mindestens einen Trägerplatte,
- Ausbildung einer stapelförmigen Anordnung der Trägerplatte und der den oberseitigen und unterseitigen Schichtaufbau bildenden Papierlagen, wobei die Papierlagen des oberseitigen Schichtaufbaus oberhalb der mindestens einen Trägerplatte und die Papierlagen des unterseitigen Schichtaufbaus unterhalb des mindestens einen Trägerplatte vorgesehen sind;
- Einfahren der stapelförmigen Anordnung in mindestens eine Presseinrichtung und Verpressen der stapelförmigen Anordnung zu einem Holzwerkstofflaminat bei einer Presstemperatur zwischen 180°C und 220°C..

Gemäß dem vorliegenden Verfahren werden somit mehrere, d.h. mindestens drei, bevorzugt mindestens vier unterschiedliche harzimprägnierte zellulosehaltige Lagen bzw. harzimprägnierte Papierlagen als Oberschicht, eine Trägerplatte und mindestens eine, bevorzugt mindestens zwei harzimprägnierte zellulosehaltige Lagen bzw. harzimprägnierte Papierlagen als Unterschicht zunächst in einem Stapel übereinander angeordnet und anschließend in einem Schritt miteinander verpresst. Die Papierlagen des oberen und unteren Schichtaufbaus liegen dabei vor Beginn des Verfahrens lose und unverpresst vor, d.h. auf die Ausbildung einer separaten Schichteinheit wie im Falle des HPL kann vorliegend verzichtet werden. Nach dem Verpressen in einer geeigneten Presseinrichtung weist das Holzwerkstofflaminat folgenden Schichtaufbau von oben nach unten gesehen auf: Papierlagen des oberseitigen Schichtaufbaus - Trägerplatte - Papierlagen des unterseitigen Schichtaufbaus.

Das vorliegende Verfahren ermöglicht somit die Herstellung von hochwertigen Laminaten anwendbar für den gewerblichen Bereich (Laminate der Klasse 34) in einem Arbeitsgang und in einer Maschine. Dies erlaubt nicht nur eine kostengünstige Herstellung der höherwertigen Laminate sondern auch eine kurze Reaktionszeit auf Kundenanfragen bezüglich Dekor, insbesondere bei digital bedruckten Dekorpapieren. Zudem ist nunmehr die Bereitstellung von so genannten Regenbogenpaletten an Laminaten möglich, bei der unterschiedliche Dekore nacheinander verarbeitet werden; dem Trend zu kleinsten Losgrößen folgend. Das vorliegende Verfahren erlaubt des Weiteren die Einhaltung hoher Qualitätsstandards für Laminate der Klasse 34 und damit ein neues Anwendungsfeld für hochwertige DPL-Laminate.

In einer Ausführungsform des vorliegenden Verfahrens ist die mindestens eine Trägerplatte eine Holzwerkstoffplatte aus der Gruppe enthaltend Spanplatten, hochdichte Holzfaserplatte (HDF), mitteldichte Holzfaserplatte (MDF), OSB-Platte und WPC-Platte ausgewählt. Die Trägerplatte besteht somit bevorzugt aus Holzpartikeln in Form von lignocellulosehaltige Zerkleinerungsprodukten wie z.B. Holzfasern, Holzspäne oder auch Holzstrands. Im Falle der Verwendung von Holzfasern kommen insbesondere trockene Holzfasern mit einer Länge von 1,0 mm bis 20 mm, bevorzugt 1,5 mm bis 10 mm und einer Dicke von 0,05 mm bis 1 mm zum Einsatz.

Es ist weiterhin bevorzugt, wenn die als Trägerplatte verwendete Holzwerkstoffplatte eine maximale Rohdichte von 1400 kg/m³, bevorzugt 1200 kg/m³, eine minimale Rohdichte von 750 kg/m³, bevorzugt 800 kg/m³, und eine mittlere Rohdichte von 850 kg/m³ aufweist.

In einer Variante des vorliegenden Verfahrens werden für die als Trägerplatte zum Einsatz kommenden Holzwerkstoffplatten Bindemittel bzw. Klebstoffe ausgewählt aus der Gruppe enthaltend Aminoplastharze, bevorzugt Melamin-Formaldehyd-Harz, Melamin-Harnstoff-Formaldehyd-Harz, Harnstoff-Formaldehydharz oder Phenol-Formaldehyd-Harz, Isocyanate, acrylhaltige Harze oder auch Polytetrafluorethylen (PTFE) verwendet.

In einer weiteren Variante des vorliegenden Verfahrens weist die als Trägerplatte verwendete Holzwerkstoffplatte aus Holzfasern einen Bindemittelanteil von 10 bis 150 kg/m³, bevorzugt 50 bis 100 kg/m³ bezogen auf das Gewicht atro Holz in Abhängigkeit von dem verwendeten Bindemittel auf. So liegt der Bindemittelanteil bei der Verwendung von Isocyanaten wie pMDI zwischen 10 bis 45 kg/m³, bevorzugt 15 bis 20 kg/m³ bezogen auf das Gewicht atro Holz. Im Falle von Amino- und Phenoplastharzen als Bindemittel liegt der Bindemittelanteil bei 70 bis 150 kg/m³, bevorzugt 90 bis 100 kg/m³ bezogen auf das Gewicht atro Holz. Im Falle der Verwendung von WPC (Wood Plastic Composites) liegt der Anteil von Kunststoffen als Bindemittel in einem Bereich von 150 bis 350 kg/m³, bevorzugt 240 bis 280 kg/m³ bezogen auf das Gewicht atro Holz.

Für den Fall, dass ein Isocyanat als Bindmittel verwendet wird, ist dieses ausgewählt aus einer Gruppe enthaltend aliphatische und aromatische Isocyanate. Als aliphatische Isocyanate können zum Beispiel Hexamethylendiisocyanat (HDI), Isophorondiisocyanat (IPDI) und/oder 1,4-Cyclohexyldiisocyanat (CHDI) verwendet werden. Typische geeignete aromatische Isocyanate sind zum Beispiel Diphenylmethandiisocyanat (MDI) oder Toluylendiisocyanat (TDI) oder auch polymeres Diphenylmethandiisocyanat (PMDI), wobei Letzteres besonders bevorzugt ist. Das Isocyanat unterliegt bei seiner Verwendung als Bindemittel zwei chemischen Reaktionen. Zum einen bildet es in Gegenwart von Wasser Polyharnstoff aus. Parallel dazu erfolgt die Anbindung an die Holzpartikel durch die Reaktion der Isocyanate mit freien Hydroxy- oder Aminogruppen an der Oberfläche der Holzpartikel und/oder Lederpartikel unter Ausbildung einer Urethan- oder Harnstoffbindung.

Für den Fall, dass acrylathaltige Lacke als Bindemittel bzw. Klebstoff in der Holzwerkstoffplatte verwendet werden, sind diese bevorzugt (Meth)acrylate, wie zum Beispiel Polyesther(meth)acrylate, Polyether(meth)acrylate, Epoxy(meth)acrylate oder Urethan(meth)acrylate. Es ist auch denkbar, dass das verwendete Acrylat bzw. der acrylathaltige Lack substituierte oder unsubstituierte Monomere, Oligomere und/oder Polymere, insbesondere in Form von Acrylsäure-, Acrylether- und/oder Acrylsäureestermonomeren, Oligomeren oder Polymeren vorliegt. Die Polyacrylate können auch weiterhin funktionalisiert vorliegen. Geeignete funktionelle Gruppen sind unter anderem Hydroxy-, Amino-, Epoxy- und/oder Carboxylgruppen.

Die Dicke der als Trägerplatte verwendeten Holzwerkstoffplatte kann je nach Bedarf zwischen 1 und 60 mm, bevorzugt zwischen 5 und 15 mm, insbesondere 8 und 12 mm betragen.

In einer bevorzugten Ausführungsform des vorliegenden Verfahrens weist die als Trägerplatte verwendete Holzwerkstoffplatte eine Quellung von bis zu 8% nach EN 13329:2013, bevorzugt bis zu 7%, insbesondere bevorzugt bis zu 5% auf. Die Quellung der Holzwerkstoffplatte ist hierbei auf eine 24 stündige Wasserlagerung und einem mindestens dreifachen Zyklus jeweils mit Rücktrocknung bezogen. Gemäß den Anforderungen der EN 13329:2013 für Holzwerkstofflaminate der Klasse 34 muss die Quellung der Trägerplatte unter 8% liegen. Wenn die Trägerplatte zu schwach ist (Dichte) ist der im Pressverfahren erforderliche Preßdruck z.B. in Höhe von 50-70 kg/cm² nicht möglich.

Das zur Imprägnierung der Papierlagen des oberseitigen und unterseitigen Schichtaufbaus verwendete Harz kann ein Aminoplastharz ausgewählt aus der Gruppe enthaltend Melamin-Formaldehyd-Harz, Melamin-Harnstoff-Formaldehyd-Harz, und Harnstoff-Formaldehydharz; oder ein Phenol-Formaldehyd-Harz sein. Generell ist auch die Verwendung von Mischungen oder beliebigen Kombinationen aus den genannten Harzen als Imprägnierharze möglich.

Es ist weiterhin bevorzugt, wenn die (Kern)Papierlagen des oberseitigen und unterseitigen Schichtaufbaus ein Gewicht von 40 bis 250 g/m², bevorzugt 60 bis 150 g/m², insbesondere bevorzugt von 80 bis 120 g/m² und einen Beharzungsgrad von 40 bis 180%, bevorzugt 80 bis 130%, insbesondere bevorzugt 125% bezogen auf das Gewicht des trockenen Papiers aufweisen. Die Anzahl der harzimprägnierten Kernpapierlagen ist dabei selbstverständlich nicht auf eine oder zwei beschränkt, sondern kann auch mehr als zwei, insbesondere drei, vier, fünf oder sechs betragen.

In einer weiteren Ausführungsform des vorliegenden Verfahrens weist die mindestens eine mit einem Harz imprägnierte Dekorpapierlage ein Gewicht von 35 bis 180g/m², bevorzugt 50 bis 110 g/m², insbesondere bevorzugt 70 bis 100 g/m² und einen Beharzungsgrad von 80 bis 180%, bevorzugt 90 bis 110%, insbesondere bevorzugt 100% bezogen auf das Gewicht des trockenen Papiers auf.

Dekorpapiere sind Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten muss das verwendete Papier eine gute Glätte und Dimensionsstabilität aufweisen und ebenfalls für eine Penetration einer notwendigen Kunstharzimprägnierung geeignet sein.

Als Drucktechniken für die Herstellung des Dekorpapiers ist es vorteilhaft, analoge Tiefdruck- und Digitaldruckverfahren anzuwenden. Das Tiefdruckverfahren ist eine Drucktechnik, bei der die abzubildenden Elemente als Vertiefungen in einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand, wie zum Beispiel ein Trägermaterial, übertragen. Hingegen wird beim Digitaldruck das Druckbild direkt von einem Computer in eine Druckmaschine, wie zum Beispiel einen Laserdrucker oder Tintenstrahldrucker, übertragen. Dabei entfällt die Verwendung einer statischen Druckform. In beiden Verfahren ist die Verwendung von wässrigen Farben und Tinten oder farbgebender Mittel auf UV-Basis möglich.

Ebenfalls ist es vorstellbar, die genannten Drucktechniken aus Tief- und Digitaldruck zu kombinieren. Eine geeignete Kombination der Drucktechniken kann zum einen unmittelbar auf der Trägerplatte bzw. der zu bedruckenden Schicht erfolgen oder auch vor dem Drucken durch Anpassung der verwendeten elektronischen Datensätze.

In einer Ausführungsform des vorliegenden Verfahrens wird das Dekor mittels eines der oben genannten analogen und/oder digitalen Druckverfahren entweder auf die noch unbeharzte oder die wenigstens teilweise beharzte Zelluloselage aufgebracht,

In einer weiteren Variante des vorliegenden Verfahrens weist die mindestens eine mit einem Harz imprägnierte abriebfeste Papierlage (Overlay) ein Gewicht von 10 bis 80 g/m², bevorzugt 20 bis 50 g/m², insbesondere bevorzugt 25 g/m² und einen Beharzungsgrad von 200 bis 900%, bevorzugt 500 bis 700%, insbesondere bevorzugt von 680% bezogen auf das Gewicht des trockenen Papiers auf. Die Anzahl der harzimprägnierten abriebfesten Papierlagen (Overlay) ist dabei nicht auf eine Lage beschrängt, sondern kann auch mehr als eins, insbesondere zwei und mehr betragen.

In einer Variante des vorliegenden Verfahrens weist die mindestens eine abriebfeste Papierlage (Overlay) 20 bis 80 g/m², bevorzugt 40 bis 60 g/m² an abriebfesten Partikeln, insbesondere an Korund oder Glaspartikeln auf.

Neben den abriebfesten Partikeln können in der abriebfesten Papierlage auch weitere Additive, wie natürliche oder synthetische Fasern, Flammschutzmittel und/oder luminiszierende, antibakterielle Stoffe vorhanden sein. Geeignete Flammschutzmittel können ausgewählt sein aus der Gruppe enthaltend Phosphate, Borate, insbesondere Ammoniumpolyphosphat, Tris(tri-bromneopentyl)phosphat, Zinkborat oder Borsäurekomplexe von mehrwertigen Alkoholen. Als luminiszierende Stoffe können fluoreszierende oder phosphorisierende Stoffe, insbesondere Zinksulfit und Alkalialuminate und Silberverbindungen als Antibakterium zum Einsatz kommen.

Gemäß einer weiteren bevorzugten Ausführungsform des vorliegenden Verfahrens umfasst der unterseitige Schichtaufbau mindestens eine weitere auf die mindestens eine oder zwei Papierlagen (Kernpapier) folgende imprägnierte Papierlage (Gegenzugpapier) mit einem Gewicht von 60 bis 250 g/m², bevorzugt 80 bis 160 g/m², insbesondere bevorzugt 120 bis 140 g/m², und einem Beharzungsgrad von 80 bis 150 %, bevorzugt 100 bis 120%, insbesondere bevorzugt 105 bis 110%, ganz besonders bevorzugt von 103%.

Es ist hervorzuheben, dass der unterschiedliche Beharzungsgrad der einzelnen in dem oberseitigen und unterseitigen Schichtaufbau verwendeten Papierlagen die Festigkeitseigenschaften der jeweiligen Beschichtungen und damit des Gesamtaufbaus verantwortlich ist.

Entsprechend wird mit dem vorliegenden Verfahren ein Holzwerkstofflaminat bereitgestellt, welches folgenden Schichtaufbau aufweisen kann (von oben nach unten gesehen): abriebfestes Overlay - Dekorpapier - erstes Kernpapier - zweites Kernpapier - Trägerplatte - erstes Kernpapier - zweites Kernpapier - Gegenzugpapier.

Derartige Holzwerkstofflaminate können insbesondere als Fußbodenlaminate verwendet werden, und weisen eine erhöhte Abriebbeständigkeit und Stoßbeanspruchung aus.

In einer weiteren bevorzugten Ausführungsform umfasst der unterseitige Schichtaufbau mindestens eine auf die mindestens zwei Papierlagen folgende mit einem Harz imprägnierte Dekorpapierlage und mindestens eine mit einem Harz imprägnierte Papierlage (Overlay) mit oder ohne abriebfeste Partikel. Es ist auch möglich, in dem unterseitigen Schichtaufbau auf die Verwendung einer Overlayschicht, die auf der Dekorpapierlage angeordnet ist, zu verzichten. Die Eigenschaften der Dekorpapierlage und der abriebfesten Papierlage des unterseitigen Schichtaufbaus entsprechen bevorzugt den Eigenschaften der Dekorpapierlage und der abriebfesten Papierlage des oberseitigen Schichtaufbaus; entsprechend sei auf die obigen Ausführungen verwiesen.

Gemäß dieser Ausführungsform kann somit ein Holzwerkstofflaminat mit dem folgenden Schichtaufbau bereitgestellt werden (von oben nach unten gesehen): abriebfestes Overlay - Dekorpapier - erstes Kernpapier - zweites Kernpapier - Trägerplatte - erstes Kernpapier - zweites Kernpapier - Dekorpapier - opt. Overlay (ohne oder mit abriebfesten Partikeln).

Derartige Holzwerkstofflaminate eignen sich insbesondere zur Anwendung im Möbelbereich, z.B. als Arbeitsplatten für Büromöbel oder auch im Küchenbereich.

In einer weiteren Variante des vorliegenden Verfahrens wird die stapelförmige Anordnung aus Trägerplatte und Papierlagen für den ober- und unterseitigen Schichtaufbau mit einem Druck von 30 bis 70 kg/cm², bevorzugt 40 bis 60 kg/cm², insbesondere bevorzugt 50 bis 60 kg/cm² zu einem Holzwerkstofflaminat verpresst.

Die Presstemperatur kann zwischen 120 und 260°C, bevorzugt zwischen 150 und 240°C, insbesondere bevorzugt zwischen 180 und 220°C betragen und die Presszeit kann zwischen 15 und 60 sec, bevorzugt 20 und 50 sec, insbesondere bevorzugt 35 sec betragen. Kürzere Presszeiten ermöglichen dabei die Bereitstellung von Holzwerkstofflaminaten mit höherer Abriebfestigkeit.

In einer weitergehenden Ausführungsform des vorliegenden Verfahrens wird während des Pressvorganges eine Prägestruktur in mindestens eine Seite des Holzwerkstofflaminats, bevorzugt in den mindestens einen oberseitigen Schichtaufbau eingebracht. Die Prägestruktur wird bevorzugt unter Verwendung von strukturierten Lackwalzen, strukturierten Kalandern oder strukturierten Pressblechen eingetragen. Besonders bevorzugt kommen vorliegend Pressbleche zum Einsatz. Die Prägestruktur verläuft bevorzugt synchron oder zumindest teilweise synchron zum Dekor. Es ist somit möglich, Holzwerkstofflaminate der Klasse 34 (HPL) mit Synchronporen in Direktbeschichtung bereitzustellen.

Der mehrschichtige Papieraufbau ermöglicht das Einpressen von tieferen Strukturen von z.B. mit einer Tiefe bis zu 500 µm. Damit könne insbesondere bei Fliesen-Motiven die Fugen deutlich sichtbar dargestellt werden.

Vor dem Einfahren der stapelförmigen Anordnung in die bevorzugt taktende Presseinrichtung kann eine Ausrichtung des Stapels, insbesondere zur Ausrichtung des Stapels bezüglich Dekor und/oder strukturprägenden Werkzeug zueinander, erfolgen. Die Genauigkeit der Ausrichtung auf der Oberseite (und Unterseite) beträgt bevorzugt +/- 1,5 mm. Der Anteil an zum Dekor synchronen Strukturen kann damit mindestens 20% betragen.

Wie oben bereits ausgeführt, ermöglicht das vorliegende Verfahren die Herstellung eines hochwertigen Holzwerkstofflaminates der Klasse 34, insbesondere geeignet zur Verwendung als Fußbodenlaminat im gewerblichen Bereich, und die Herstellung eines Holzwerkstofflaminats, das als Möbel- bzw. Arbeitsplatte, oder Wand- und Deckenvertäfelung einsetzbar ist. Das vorliegende Holzwerkstofflaminat weist bevorzugterweise eine Prägestruktur, insbesondere in Form von Synchronporen auf, die in der oben beschriebenen Weise die Beschichtung während des Pressens eingebracht wird.

Die Erfindung wird nachfolgend unter Bezugnahme auf die Figuren der Zeichnungen an mehreren Ausführungsbeispielen näher erläutert. Es zeigen:
- Figur 1: eine erste Ausführungsform eines Holzwerkstofflaminats hergestellt gemäß dem erfindungsgemäßen Verfahren; und
- Figur 2: eine zweite Ausführungsform eines Holzwerkstofflaminats hergestellt gemäß dem erfindungsgemäßen Verfahren.

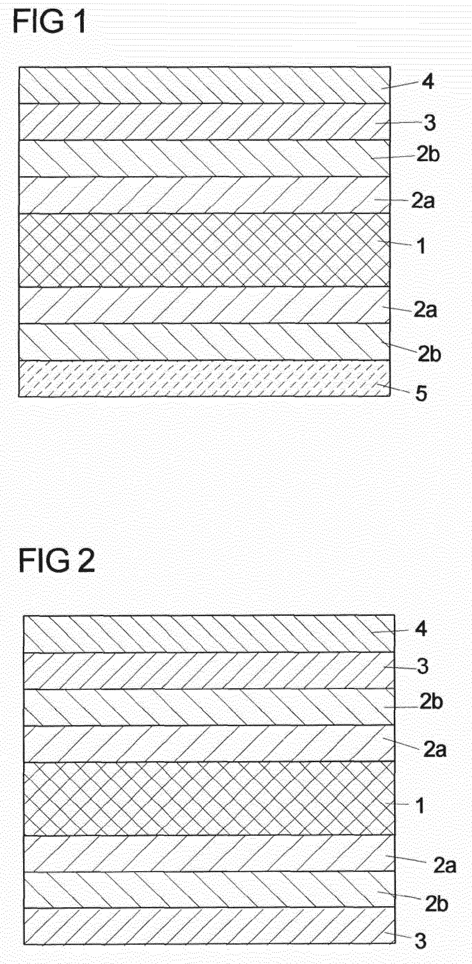

Das in Figur 1 gezeigte Holzwerkstofflaminat gemäß einer ersten Ausführungsform besteht aus einer hochdichten Holzfaserplatte (HDF) als Trägerplatte 1 mit einem oberseitigen Schichtaufbau aus ersten und zweiten Kernpapier 2a, 2b in Form von harzimprägnierten zellulosehaltigen Papierlagen gefolgt von einem harzimprägnierten Dekorpapier 3 und einem harzimprägnierten abriebfesten Overlay 4 mit Korundpartikeln. Der unterseitige Schichtaufbau umfasst ebenfalls ein erstes und zweites Kernpapier 2, 2b gefolgt, im Unterschied zum oberseitigen Schichtaufbau, von einem Gegenzugpapier 5.

Zur Imprägnierung der einzelnen zellulosehaltigen Lagen wurde vorliegend jeweils ein Melaminharz eingesetzt. Das Kernpapier 2a, 2b weist dabei einen Beharzungsgrad von 125%, das Dekorpapier 3 einen Beharzungsgrad von 100%, das Overlay 4 einen Beharzungsgrad von 680% und das Gegenzugpapier einen Beharzungsgrad von 103% jeweils bezogen auf das Gewicht des trockenen Papiers aus.

Zur Herstellung des Holzwerkstofflaminats der Figur 1 in einem Verfahrensschritt werden die einzelnen Lagen in der oben angeführten Reihenfolge übereinander gestapelt und ausgerichtet. Der Stapel aus mehreren Lagen wird in eine Kurztaktpresse KT2 eingefahren und verpresst. Die Presszeit beträgt 27 sec bei einer Temperatur von 204°C oben und einer Temperatur von 212°C unten. Der Pressdruck beträgt 48 kg/cm² bei einer Zykluszeit von 2 Min.

Das so hergestellte Holzwerkstofflaminat gemäß prEN13329:2013 auf die Beanspruchbarkeit geprüft. Die Ergebnisse sind Tabelle 1 zusammengefasst.

**Tabelle 1: Testergebnisse für ein erstes Holzwerkstofflaminat gemäß prEN 13329:2013**

| **Eigenschaft** | **Anforderung gemäß EN 13329** | **Prüfergebnis** |
|---|---|---|
| Abriebbeständigkeit | AC6 ≥ 8500 Umdrehungen | 9500-11000 |
| Stoßbeanspruchung | | |
| Kleine Kugel | ≥ 20 N | 22 |
| Große Kugel | ≥ 500 mm | 1 600 |
| Dickenquellung | ≤ 8% | 4 |

Das Holzwerkstofflaminat gemäß der Ausführungsform der Figur 1 erfüllt somit die Anforderungen an ein Laminat der Klasse 34 und kann im gewerblichen Bereich z.B. als Fußbodenlaminat eingesetzt werden.

Das Holzwerkstofflaminat gemäß einer zweiten Ausführungsform gezeigt in Figur 2 unterscheidet sich im Schichtaufbau von dem Aufbau der Figur 1 dahingehend, dass zum einen eine Spanplatte als Trägerplatte 1 verwendet wird und zum anderen der unterseitige Schichtaufbau anstatt des Gegenzugpapiers 5 eine harzimprägnierte Dekorpapierlage 3 aufweist. Auf die Dekorpapierlage 3 des unterseitigen Schichtaufbaus kann zusätzlich ein Overlaypapier 4 (nicht gezeigt) hier bevorzugt ohne abriebfeste Partikel aufgetragen werden.

Die Verpressung der übereinander gestapelten Lagen erfolgt unter vergleichbaren Bedingungen wie für das Holzwerkstofflaminat der Figur 1 beschrieben. Die Eigenschaften des Holzwerkstofflaminats gemäß der zweiten Ausführungsform sind in Tabelle 2 zusammengefasst. Die Norm 438-3 betrifft Anforderungen an Möbelelemente.

**Tabelle 2: Testergebnisse für ein zweites Holzwerkstofflaminat gemäß EN 438-3**

| **Eigenschaft** | **Anforderung gemäß EN 438-3** | **Prüfergebnis** |
|---|---|---|
| Beständigkeit gegenüber trockener Wärme (Topfbödentest) | 3-4 | 4 |
| | 1 (schlecht) - 5 (gut) | |
| Kratzfestigkeit | Grad 3 | 4 |
| | 1 (schlecht) - 4 (gut) | |
| Abbriebbeständigkeit | ≥ 350 Umdrehungen (min) | 3250 |
| Stoßbeanspruchung | ≥ 20 N (min) | 21 |
| Fleckenunempfindlichkeit (Säuretest 24 h) | 2 | 2 |
| | 1 (gut) - 5 (schlecht) | |

Das Holzwerkstofflaminat gemäß der Ausführungsform der Figur 2 erfüllt die Anforderungen an ein Laminat, dass im Möbelbereich z.B. als Arbeitsplatte einsetzbar ist.

## Patentansprüche

1. Verfahren zur Herstellung eines Holzwerkstofflaminats umfassend die Schritte
- Bereitstellen von mindestens einer Holzwerkstoffplatte ausgewählt aus der Gruppe enthaltend Spanplatten, hochdichte Holzfaserplatte (HDF), mitteldichte Holzfaserplatte (MDF), OSB-Platte und WPC-Platte als Trägerplatte;
- Bereitstellen von mindestens einer mit einem Harz imprägnierten Papierlage mit einem Gewicht von 40 bis 250 g/m² und einem Beharzungsgrad von 40 bis 180%, mindestens einer mit einem Harz imprägnierten Dekorpapierlage mit einem Gewicht von 35 bis 180g/m² und einem Beharzungsgrad von 80 bis 180% und mindestens einer mit einem Harz imprägnierten abriebfesten Papierlage mit einem Gewicht von 10 bis 80 g/m² und einem Beharzungsgrad von 200 bis 900% zur Ausbildung von mindestens einem oberseitigen Schichtaufbau auf der mindestens einen Trägerplatte;
- Bereitstellen von mindestens einer mit einem Harz imprägnierten Papierlage mit einem Gewicht von 40 bis 250 g/m² und einem Beharzungsgrad von 40 bis 180% zur Ausbildung von mindestens einem unterseitigen Schichtaufbau auf der mindestens einen Trägerplatte,
- Ausbildung einer stapelförmigen Anordnung der Trägerplatte und der den oberseitigen und unterseitigen Schichtaufbau bildenden Papierlagen, wobei die Papierlagen des oberseitigen Schichtaufbaus oberhalb der mindestens einen Trägerplatte und die Papierlagen des unterseitigen Schichtaufbaus unterhalb des mindestens einen Trägerplatte vorgesehen sind;
- Einfahren der stapelförmigen Anordnung in mindestens eine Presseinrichtung und Verpressen der stapelförmigen Anordnung zu einem Holzwerkstofflaminat bei einer Presstemperatur zwischen 180°C und 220°C.

2. Verfahren nach Anspruch 1, **dadurch gekennzeichnet, dass** die als Trägerplatte verwendete Holzwerkstoffplatte eine maximale Rohdichte von 1400 kg/m³, bevorzugt 1200 kg/m³, eine minimale Rohdichte von 750 kg/m³, bevorzugt 800 kg/m³, und eine eine mittlere Rohdichte von 850 kg/m³ aufweist.

3. Verfahren nach einem der vorhergehenden Ansprüche, **dadurch gekennzeichnet, dass** die als Trägerplatte verwendete Holzwerkstoffplatte aus Holzfasern einen Bindemittelanteil von 10 bis 45 kg/m³, bevorzugt 15 bis 20 kg/m³ bei Verwendung eines Isocyanates als Bindemittel, 70 bis 150 kg/m³, bevorzugt 90 bis 100 kg/m³ bei Verwendung von Amino- und Phenolplastharzen als Bindemittel, 150 bis 350 kg/m³, bevorzugt 240 bis 280 kg/m³ bei Verwendung von WPC-Kunststoffen bezogen auf das Gewicht atro Holz aufweist.

4. Verfahren nach einem der vorhergehenden Ansprüche, **dadurch gekennzeichnet, dass** die als Trägerplatte verwendete Holzwerkstoffplatte eine Quellung von bis zu 8%, bevorzugt bis zu 7%, insbesondere bevorzugt bis zu 5% nach EN 13329:2013 aufweist.

5. Verfahren nach einem der vorhergehenden Ansprüche, **dadurch gekennzeichnet, dass** das zur Imprägnierung der Papierlagen des oberseitigen und unterseitigen Schichtaufbaus verwendete Harz ein Aminoplastharz ausgewählt aus der Gruppe enthaltend Melamin-Formaldehyd-Harz, Melamin-Harnstoff-Formaldehyd-Harz, und Harnstoff-Formaldehydharz; oder ein Phenol-Formaldehyd-Harz ist.

6. Verfahren nach einem der vorhergehenden Ansprüche, **dadurch gekennzeichnet, dass** der oberseitige und der unterseitige Schichtaufbau jeweils zwei mit einem Harz imprägnierte Papierlagen umfasst.

7. Verfahren nach einem der vorhergehenden Ansprüche, **dadurch gekennzeichnet, dass** die mindestens zwei Papierlagen des oberseitigen und unterseitigen Schichtaufbaus ein Gewicht von 60 bis 150 g/m², insbesondere bevorzugt von 80 bis 120 g/m² und einen Beharzungsgrad von 80 bis 130%, insbesondere bevorzugt 125% bezogen auf das Gewicht des trockenen Papiers aufweisen.

8. Verfahren nach einem der vorhergehenden Ansprüche, **dadurch gekennzeichnet, dass** die mindestens eine mit einem Harz imprägnierte Dekorpapierlage ein Gewicht von 50 bis 110 g/m², insbesondere bevorzugt 70 bis 100 g/m² und einen Beharzungsgrad von 90 bis 110%, insbesondere bevorzugt 100% bezogen auf das Gewicht des trockenen Papiers aufweist.

9. Verfahren nach einem der vorhergehenden Ansprüche, **dadurch gekennzeichnet, dass** die mindestens eine mit einem Harz imprägnierte abriebfeste Papierlage ein Gewicht von 20 bis 50 g/m², insbesondere bevorzugt 25 g/m² und einen Beharzungsgrad von 500 bis 700%, insbesondere bevorzugt von 680% bezogen auf das Gewicht des trockenen Papiers aufweist.

10. Verfahren nach einem der vorhergehenden Ansprüche, **dadurch gekennzeichnet, dass** der unterseitige Schichtaufbau mindestens eine weitere auf die mindestens eine Papierlage folgende imprägnierte Papierlage (Gegenzugpapier) mit einem Gewicht von 60 bis 250 g/m², bevorzugt 80 bis 160 g/m², insbesondere bevorzugt 120 bis 140 g/m², und einem Beharzungsgrad von 80 bis 150 %, bevorzugt 100 bis 120%, insbesondere bevorzugt 105 bis 110%, ganz besonders bevorzugt von 103% umfasst.

11. Verfahren nach einem der Ansprüche 1 bis 10, **dadurch gekennzeichnet, dass** der unterseitige Schichtaufbau mindestens eine auf die mindestens eine Papierlage folgende mindestens eine mit einem Harz imprägnierte Dekorpapierlage und mindestens eine mit einem Harz imprägnierte Papierlage (Overlay) ohne oder mit abriebfesten Partikeln umfasst.

12. Verfahren nach einem der vorhergehenden Ansprüche, **dadurch gekennzeichnet, dass** die stapelförmige Anordnung mit einem Druck von 30 bis 70 kg/cm², bevorzugt 40 bis 60 kg/cm², insbesondere bevorzugt 50 bis 60 kg/cm² zu einem Holzwerkstofflaminat bei einer die Presszeit zwischen 15 und 60 sec, bevorzugt 20 und 50 sec, insbesondere bevorzugt 35 sec verpresst wird.

13. Verfahren nach einem der vorhergehenden Ansprüche, **dadurch gekennzeichnet, dass** eine Prägestruktur in mindestens eine Seite des Holzwerkstofflaminats eingebracht wird, die bevorzugt synchron oder zumindest teilweise synchron zum Dekor der Dekorpapierlage verläuft.

## Claims

1. Process for the production of a wood-based laminate comprising the steps of
- provision of, as supportive board, at least one wood-based board selected from the group comprising chipboard, high-density wood fibreboard (HDF), medium-density wood fibreboard (MDF), OSB and WPC board;
- provision of at least one resin-impregnated paper ply with weight from 40 to 250 g/m² and with degree of resinification from 40 to 180%, at least one resin-impregnated decorative paper ply with weight from 35 to 180 g/m² and with degree of resinification from 80 to 180%, and at least one resin-impregnated abrasion-resistant paper ply with weight from 10 to 80 g/m² and with degree of resinification from 200 to 900%, to form at least one upper-side layer structure on the at least one supportive board;
- provision of at least one resin-impregnated paper ply with weight from 40 to 250 g/m² and with degree of resinification from 40 to 180% to form at least one lower-side layer structure on the at least one supportive board;
- formation, in the form of a stack, of an arrangement of the supportive board and of the paper plies forming the upper-side and lower-side layer structure, where the paper plies of the upper-side layer structure are provided above the at least one supportive board and the paper plies of the lower-side layer structure are provided below the at least one supportive board;
- introduction of the arrangement in the form of a stack into at least one press device and pressing of the arrangement in the form of a stack to give a wood-based laminate at a press temperature of from 180°C to 220°C.

2. Process according to Claim 1, **characterized in that** the maximal envelope density of the wood-based board used as supportive board is 1400 kg/m³, preferably 1200 kg/m³, the minimal envelope density thereof is 750 kg/m³, preferably 800 kg/m³, and the average envelope density thereof is 850 kg/m³.

3. Process according to any of the preceding claims, **characterized in that** the binder content of the wood-based board used as supportive board, made of wood fibres, is from 10 to 45 kg/m³, preferably from 15 to 20 kg/m³ when an isocyanate is used as binder, from 70 to 150 kg/m³, preferably from 90 to 100 kg/m³ when amino-plastic resins and phenolic-plastic resins are used as binder, and from 150 to 350 kg/m³, preferably from 240 to 280 kg/m³ when WPC plastics are used, based on the weight of fully dried wood.

4. Process according to any of the preceding claims, **characterized in that** the swelling factor of the wood-based board used as supportive board is up to 8%, preferably up to 7%, with particular preference up to 5%, in accordance with EN 13329:2013.

5. Process according to any of the preceding claims, **characterized in that** the resin used for the impregnation of the paper plies of the upper-side and lower-side layer structure is an amino-plastic resin selected from the group comprising melamine-formaldehyde resin, melamine-urea-formaldehyde resin, and urea-formaldehyde resin; or is a phenolformaldehyde resin.

6. Process according to any of the preceding claims, **characterized in that** the upper-side and the lower-side layer structure respectively comprise two resin-impregnated paper plies.

7. Process according to any of the preceding claims, **characterized in that** the weight of the at least two paper plies of the upper-side and lower-side layer structure is from 60 to 150 g/m², with particular preference from 80 to 120 g/m², and the degree of resinification thereof is from 80 to 130%, with particular preference 125%, based on the weight of the dry paper.

8. Process according to any of the preceding claims, **characterized in that** the weight of the at least one resin-impregnated decorative paper ply is from 50 to 110 g/m², with particular preference from 70 to 100 g/m², and the degree of resinification thereof is from 90 to 110%, with particular preference 100%, based on the weight of the dry paper.

9. Process according to any of the preceding claims, **characterized in that** the weight of the at least one resin-impregnated abrasion-resistant paper ply is from 20 to 50 g/m², with particular preference 25 g/m², and the degree of resinification thereof is from 500 to 700%, with particular preference 680%, based on the weight of the dry paper.

10. Process according to any of the preceding claims, **characterized in that** the lower-side layer structure comprises, following the at least one paper ply, at least one other impregnated paper ply (counterbalancing paper) with weight from 60 to 250 g/m², preferably from 80 to 160 g/m², with particular preference from 120 to 140 g/m², and with a degree of resinification of from 80 to 150%, preferably from 100 to 120%, with particular preference from 105 to 110%, very particularly preferably 103%.

11. Process according to any of Claims 1 to 10, **characterized in that** the lower-side layer structure comprises, following the at least one paper ply, at least one resin-impregnated decorative paper ply and at least one resin-impregnated paper ply (overlay) with or without abrasion-resistant particles.

12. Process according to any of the preceding claims, **characterized in that** the pressure used in pressing the arrangement in the form of a stack to give a wood-based laminate with a press time of from 15 to 60 sec, preferably from 20 to 50 sec, with particular preference 35 sec, is from 30 to 70 kg/cm², preferably from 40 to 60 kg/cm², with particular preference from 50 to 60 kg/cm².

13. Process according to any of the preceding claims, **characterized in that** an embossment structure is introduced into at least one side of the wood-based laminate and preferably runs synchronously or at least to some extent synchronously with the decorative effect to the decorative paper ply.

## Revendications

1. Procédé pour la fabrication d'un stratifié à base de matériau dérivé du bois, comprenant les étapes
- disposition d'au moins un panneau de matériau dérivé du bois, choisi dans le groupe comprenant des panneaux de particules, un panneau de fibres à haute densité (HDF), un panneau de fibres à densité moyenne (MDF), un panneau OSB et un panneau WPC, en tant que panneau de support ;
- disposition d'au moins une feuille de papier imprégnée avec une résine, ayant un poids de 40 à 250 g/m² et un degré d'imprégnation de résine de 40 à 180 %, d'au moins une feuille de papier décor imprégnée avec une résine, ayant un poids de 35 à 180 g/m² et un degré d'imprégnation de résine de 80 à 180 % et d'au moins une feuille de papier résistante à l'abrasion, imprégnée avec une résine, ayant un poids de 10 à 80 g/m² et un degré d'imprégnation de résine de 200 à 900 %, pour la formation d'au moins une structure stratifiée pour la face supérieure sur ledit au moins un panneau de support ;
- disposition d'au moins une feuille de papier imprégnée avec une résine, ayant un poids de 40 à 250 g/m² et un degré d'imprégnation de résine de 40 à 180 %, pour la formation d'au moins une structure stratifiée pour la face inférieure sur ledit au moins un panneau de support ;
- formation d'un empilement du panneau de support et des feuilles de papier formant la structure stratifiée pour la face supérieure et la structure stratifiée pour la face inférieure, les feuilles de papier de la structure stratifiée pour la face supérieure étant prévues au-dessus dudit au moins un panneau de support et les feuilles de papier de la structure stratifiée pour la face inférieure étant prévues au-dessous dudit au moins un panneau de support ;
- introduction de l'empilement dans au moins un dispositif de pressage et pressage de l'empilement à une température de pressage comprise entre 180 °C et 220 °C, pour l'obtention d'un stratifié à base de matériau dérivé du bois.

2. Procédé selon la revendication 1, **caractérisé en ce que** le panneau de matériau dérivé du bois, utilisé en tant que panneau de support, présente une densité apparente maximale de 1 400 kg/m³, de préférence 1 200 kg/m³, une densité apparente minimale de 750 kg/m³, de préférence 800 kg/m³, et une densité apparente moyenne de 850 kg/m³.

3. Procédé selon l'une quelconque des revendications précédentes, **caractérisé en ce que** le panneau de matériau dérivé du bois, à nase de fibres de bois, utilisé en tant que panneau de support, présente une teneur en liant de 10 à 45 kg/m³, de préférence 15 à 20 kg/m³ dans le cas d'utilisation d'un isocyanate en tant que liant, de 70 à 150 kg/m³, de préférence 90 à 100 kg/m³ dans le cas d'utilisation de résines amino-et phénoplaste en tant que liant, de 150 à 350 kg/m³, de préférence 240 à 280 kg/m³ dans le cas d'utilisation de matières plastiques WPC, par rapport au poids du bois absolument sec.

4. Procédé selon l'une quelconque des revendications précédentes, **caractérisé en ce que** le panneau de matériau dérivé du bois, utilisé en tant que panneau de support, présente un gonflement de jusqu'à 8 %, de préférence jusqu'à 7 %, de façon particulièrement préférée jusqu'à 5 % selon EN 13329:2013.

5. Procédé selon l'une quelconque des revendications précédentes, **caractérisé en ce que** la résine utilisée pour l'imprégnation des feuilles de papier de la structure stratifiée pour la face supérieure et la face inférieure est une résine aminoplaste choisie dans le groupe comprenant une résine mélamine-formaldéhyde, une résine mélamine-urée-formaldéhyde et une résine urée-formaldéhyde ; ou une résine phénol-formaldéhyde.

6. Procédé selon l'une quelconque des revendications précédentes, **caractérisé en ce que** la structure stratifiée pour la face supérieure et la face inférieure comprend dans chaque cas deux feuilles de papier imprégnées avec une résine.

7. Procédé selon l'une quelconque des revendications précédentes, **caractérisé en ce que** lesdites au moins deux feuilles de papier de la structure stratifiée pour la face supérieure et la face inférieure présentent un poids de 60 à 150 g/m², de façon particulièrement préférée de 80 à 120 g/m² et un degré d'imprégnation de résine de 80 à 130 %, de façon particulièrement préférée de 125 %, par rapport au poids du papier sec.

8. Procédé selon l'une quelconque des revendications précédentes, **caractérisé en ce que** ladite au moins une feuille de papier décor imprégnée avec une résine présente un poids de 50 à 110 g/m², de façon particulièrement préférée de 70 à 100 g/m² et un degré d'imprégnation de résine de 90 à 110 %, de façon particulièrement préférée 100 % par rapport au poids du papier sec.

9. Procédé selon l'une quelconque des revendications précédentes, **caractérisé en ce que** ladite au moins une feuille de papier résistante à l'abrasion, imprégnée avec une résine, présente un poids de 20 à 50 g/m², de façon particulièrement préférée de 25 g/m² et un degré d'imprégnation de résine de 500 à 700 %, de façon particulièrement préférée de 680 %, par rapport au poids du papier sec.

10. Procédé selon l'une quelconque des revendications précédentes, **caractérisé en ce que** la structure stratifiée pour la face inférieure comprend au moins une autre feuille de papier imprégnée (papier de contretraction) faisant suite à la dite au moins une feuille de papier, ayant un poids de 60 à 250 g/m², de préférence de 80 à 160 g/m², de façon particulièrement préférée de 120 à 140 g/m², et un degré d'imprégnation de résine de 80 à 150 %, de préférence 100 à 120 %, de façon particulièrement préférée 105 à 110 %, de façon tout particulièrement préférée de 103 %.

11. Procédé selon l'une quelconque des revendications 1 à 10, **caractérisé en ce que** la structure stratifiée pour la face inférieure comprend au moins une au moins une feuille de papier décor imprégnée avec une résine, faisant suite à ladite au moins une feuille de papier, et au moins une feuille de papier imprégnée avec une résine (overlay) sans ou avec des particules résistantes à l'abrasion.

12. Procédé selon l'une quelconque des revendications précédentes, **caractérisé en ce qu'**on presse l'empilement avec une pression de 30 à 70 kg/cm², de préférence de 40 à 60 kg/cm², de façon particulièrement préférée de 50 à 60 kg/cm², en un stratifié à base de matériau dérivé du bois, pendant un temps de pressage compris entre 15 et 60 s, de préférence entre 20 et 50 s, de façon particulièrement préférée 35 s.

13. Procédé selon l'une quelconque des revendications précédentes, **caractérisé en ce que** dans au moins une face du stratifié à base de matériau dérivé du bois est introduite une texture gaufrée, qui est réalisée de préférence en synchronisation ou au moins en partielle synchronisation avec le décor de la feuille de papier décor.
